# EUROPEAN PATENT APPLICATION

(11) **EP 1 244 057 A2**
(43) Date of publication of application: **25.09.2002**
(21) Application number: 01115612.2
(22) Date of filing: 03.07.2001
(51) Int. Cl.: G06N 5/04

(54) **Technical support system**

(30) Priority: 20.03.2001 US 813209
(71) Applicant: Toshiba Tec Kabushiki Kaisha, Tokyo, 101-8442 (JP)
(72) Inventor: Nozaki, Mineo, Toshiba Tec Kabushiki Kaisha, Tokyo 101-8442 (JP); Ueno, Toshio, Toshiba Tec Kabushiki Kaisha, Tokyo 101-8442 (JP)
(74) Representative: Fuchs Mehler Weiss & Fritzsche

(57) **Abstract**

A technical support system includes a service information portal section (10) for providing web pages as an information input and output interface, and a knowledge base section (16) for storing various claim reports and solutions answered by an engineer with respect to the claim reports. In particular, the server further includes a claim handling section (14) for registering in the knowledge base section (16) a new claim report in which at least a claim title is structured as a combination of predetermined items of definition information on the basis of a claim content input to a client web page, and managing the registered new claim report as an unsolved claim requiring an answer from the engineer.

## Description

The present invention relates to technical support system and method for providing technical support to various claims for a manufacturer's own products acquired through a worldwide technical service network.

In recent years, many enterprises have overseas subsidiaries established as footholds for the marketing of products. In a typical enterprise, the subsidiaries sell products to end-users via, e.g. distributors and dealers. Besides, technical services such as maintenance and repair of products are provided to end-users from the dealers and direct service organizations. Major subsidiaries handle various claims reported directly from the dealers and direct service organizations in their assigned marketing regions, or indirectly from the distributors and subsidiaries. If the major subsidiaries have received claims that cannot be handled, they report such claims to an engineering and service department of the headquarters.

The engineering and service department acts as an agent between the subsidiary, which is a customer, and a product technology department of a factory or a third party vender. The engineering and service department demands a solution to the claim reported by the subsidiary from an engineer in charge in the product technology department. The engineer confirms the content of the claim, studies the cause of the claim, and carries out a supporting task for preparing the solution that can eliminate the cause. The engineering and service department confirms the solution provided by the engineer after the supporting task, produces a claim handling plan based on the solution, so as to meet individual technical support policies varying from market to market, and delivers the claim handling plan to the subsidiary as an answer document to the claim.

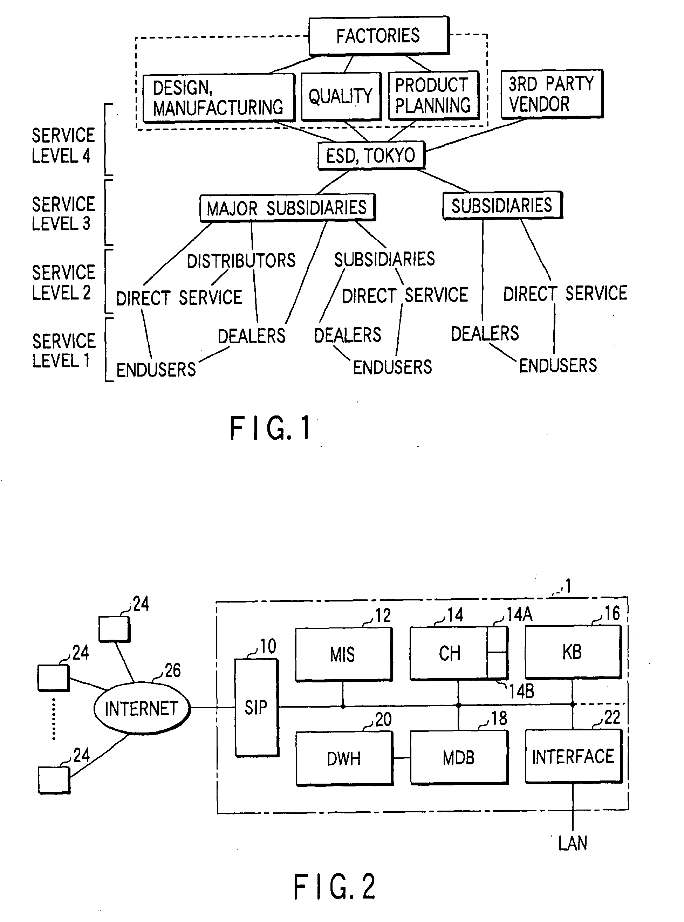

In the prior art, the dealers, direct service organizations, distributors, subsidiaries, major subsidiaries, engineering and service department, and product technology department are connected over a dedicated line or the Internet so as to have a hierarchical structure, as shown in FIG. 1. E-mail is used as an information transmission media. In the technical support, each service layer is always required to search databases, etc. to find solutions to claim reports, which have been sent from a lower-level service layer by e-mail. If solutions are not found, each service layer is required to request an upper-level service layer. Thus, arrears of claim reports may possibly occur in an escalation from the lowermost service layer to the uppermost service layer.

Since the main task of the product technology department is designing and manufacture of products, a delay in the support task will often occur even if it receives a request from the engineering and service depart. In such a situation that the supporting task cannot be started, the supporting task has to be suspended, or the cause of the claim cannot easily be identified.

Moreover, the engineering and service department cannot completely grasp the condition of progress in the delayed supporting tasks, and unsolved claim reports tend to accumulate. Besides, a solution to a claim that has arisen in connection with a product is not necessarily applicable to a similar claim that has arisen in connection with another product sold in a different market in which different product specifications are adopted. Thus, the engineering and service department needs to accept all claim reports from the subsidiaries that manage different markets.

Under the circumstances, the above-described technical support system will ultimately impose a heavy load on the engineering and service department and it would be difficult to fulfill their roles in the future without increasing the scale thereof.

The object of the present invention is to provide a technical support system and a technical support method capable of quickly solving claims relating to products.

According to the present invention, there is provided a technical support system comprising:
a service information portal section for providing web pages as an information input and output interface;
a knowledge base section for storing various claim reports and solutions answered by an engineer with respect to the claim reports; and a claim handling section for registering in the knowledge base section
a new claim report in which at least a claim title is structured as a combination of predetermined items of definition information on the basis of a claim content is input to a client web page, and managing the registered new claim report as an unsolved claim requiring an answer from the engineer.

According to the present invention, there is provided a technical support method using a knowledge base section for storing various claim reports and solutions answered by an engineer with respect to the claim reports, the method comprising: a step of providing web pages as an information input and output interface; and a step of registering in the knowledge base section a new claim report in which at least a claim title is structured as a combination of predetermined items of definition information on the basis of a claim content input to a client web page, and managing the registered new claim report as an unsolved claim requiring an answer from the engineer.

According to the technical support system and the technical support method, a new claim report in which at least a claim title is structured as a combination of predetermined items of definition information on the basis of a claim content input to a client web page, is registered in the knowledge base section, and the registered new claim report is managed as an unsolved claim requiring an answer from the engineer. Therefore, whether a solution to a claim report has already been obtained can be found by a high-precision search. If the solution is found by the search, an answer from the engineer is not needed and the claim can be quickly solved.

This summary of the invention does not necessarily describe all necessary features so that the invention may also be a sub-combination of these described features.

The invention can be more fully understood from the following detailed description when taken in conjunction with the accompanying drawings, in which:
FIG. 1 shows a hierarchical structure of a conventional technical service;
FIG. 2 shows a structure of a technical support system according to an embodiment of the present invention, and a network connected to the technical support system;
FIG. 3 shows a flow of information in the technical support system shown in FIG. 2;
FIG. 4 shows an example in which the technical support system shown in FIG. 2 is applied to a conventional hierarchical structure;
FIG. 5 is a flowchart illustrating a reporting process for an unformatted claim such as a claim report issued in a dealer shown in FIG. 4;
FIG. 6 shows a synonym table for specifying problem codes in a knowledge base search shown in FIG. 5;
FIG. 7 shows a synonym table for specifying unit codes in the knowledge base search shown in FIG. 5;
FIG. 8 shows a claim report prepared in the reporting process for unformatted claims shown in FIG. 5;
FIG. 9 shows detailed contents of items incorporated in the claim report shown in FIG. 8;
FIG. 10 is a flowchart illustrating a reporting process for a formatted claim such as the claim report shown in FIG. 8;
FIG. 11 is a flowchart illustrating a schedule management process for an unsolved claim report registered in FIG. 10;
FIG. 12 shows a stepwise transition in the supporting task managed by the schedule management process in FIG. 11;
FIG. 13 shows an example in which statuses representing the state of progress in the supporting task shown in FIG. 12 are managed by a sub-task sheet;
FIG. 14 is a flowchart illustrating an answering process for preparing an answer document on the basis of a solution acquired in the supporting task illustrated in FIG. 12; and
FIG. 15 shows an example in which the technical support system shown in FIG. 2 is applied to a novel technical service structure.

A technical support system 1 according to
an embodiment of the present invention will now be described with reference to the accompanying drawings. The technical support system 1 is constructed to be also applicable to a hierarchical structure of technical service shown in FIG. 1, and serves as a server disposed in an engineering and service department in Tokyo, for example. This server is connected over the Internet to worldwide major subsidiaries as clients, which serve as sales footholds of products such as copiers and facsimile machines. The server, on behalf of staff of the engineering and service department, functions as an agent between the customer and the product technology department of the factory or third party vender.

FIG. 2 shows the technical support system 1 and a network connected thereto. The technical support system 1 comprises a service information portal (SIP) section 10, a management information system (MIS) section 12, a claim handling (CH) section 14, a knowledge base (KB) section 16, a master database (MDB) section 18, a data warehouse (DWH) section 20, and a communication interface 22. The SIP section 10, MIS section 12, CH section 14, KB section 16, MDB section 18, DWH section 20 and communication interface 22 for intra-company LAN are constructed as a combination of plural server computers connected, for example, over a shared system bus. The MIS section 12 and CH section 14 are incorporated into the technical support system 1 as application software of the server computers.

The SIP section 10 provides web pages to client terminals 24 over the Internet 26 as an information input and output interface. The MIS section 12 can access the client terminals 24 via the SIP section 10 and it collects and analyzes various report information. The master database 18 stores the overall information collected by the MIS section 12 as well as other information. The DWH section 20 stores an analysis tool for enabling the MIS section 12 to analyze the information stored in the MDB section 18. The KB section 16 stores various claim reports backed up also in the MDB section 18 and solutions answered by engineers of the product technology department with respect to the claim reports. The CH section 14 registers in the KB section 16 a new claim report in which at least a claim title is structured as combinations of predetermined items of definition information on the basis of claims input to the client web page provided by the SIP section 10. The CH section 14 manages the new claim report as an unsolved claim requiring an answer from engineers.

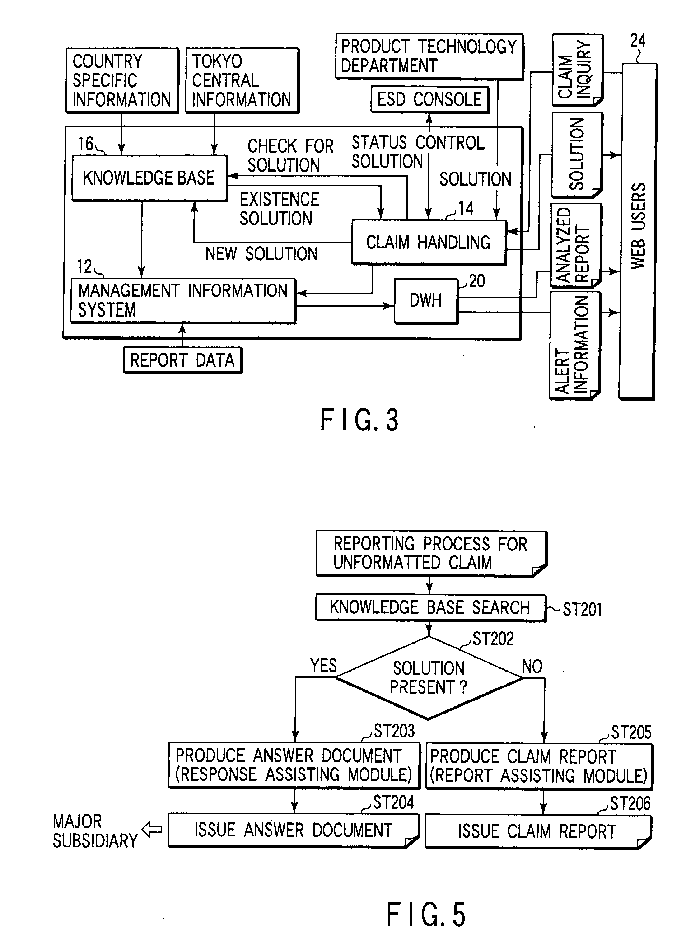

FIG. 3 shows a flow of information in the technical support system 1. If the client terminal 24, or a web user, issues a claim inquiry, it is delivered to the CH section 14 as a claim report. The CH section 14 checks the KB section 16 for a solution to the claim, and acquires the solution from the KB section 16. If there is no solution, the CH section 14 requests a solution from the product technology department and registers an acquired solution in the KB section 16 as a new solution. At the same time, the CH section 14 informs the client of the new solution as an answer document. The KB section 16 stores not only various reports and solutions thereto, but also country specific information and Tokyo central information supplied from the intra-company LAN. The country specific information includes individual technical support policies varying from market to market, the Tokyo central information includes inside materials and third party materials of related technologies. The CH section 14 is so constructed as to permit an operator working at the engineering and service department to confirm, through a console of the server computer, the current state of support for unsolved claim reports. The MIS section 12 collects various report information such as warrantee report data, call center data, set-up report data, service parts use data and claim report data, which are accumulated in the client terminal 24 side.

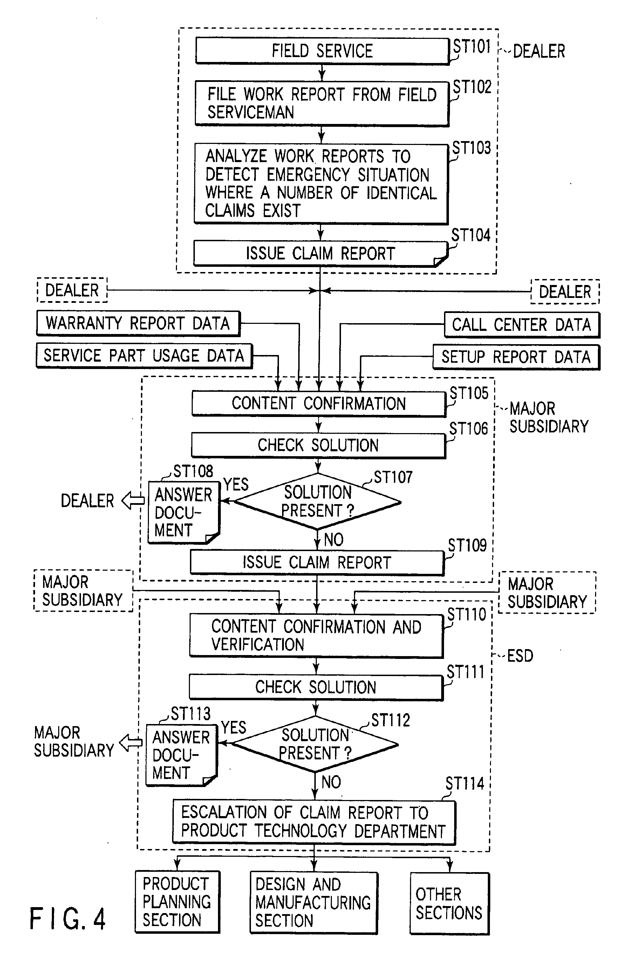

FIG. 4 shows an example wherein the technical support system 1 is applied to the conventional hierarchical structure shown in FIG. 1. In this example, the major subsidiaries alone are permitted to access the technical support system 1 via the Internet 26. None of the dealers, direct service organizations, distributors and ordinary subsidiaries are permitted to access the technical support system 1. In the dealership, a field serviceman performs, in step ST101, a field service such as maintenance and repair of products. In step ST102, if a work report from the field serviceman is filed after the field service, the work report is analyzed in step ST103. If an emergency situation where a number of identical claims exist is detected, a claim report is issued in step ST104 to the major subsidiary, which is an upper-level service layer.

In major subsidiaries, an employee confirms, in step ST105, the content of the claim report along with the independently collected various report information such as warrantee report data, call center data, set-up report data, service parts use data and claim report data. Then, the computer operator registers the confirmed information in the database. In step ST106, the operator checks the database for an existing solution to the claim of the claim report. If it is determined in step ST107 that the solution is present in the database, an answer document based on the solution is sent to the dealer in step ST108. On the other hand, if there is no existing solution, the operator accesses, in step ST109, the technical support system 1 in Tokyo over the Internet 26, which is an upper-level service layer. The claim is reported to the engineering and service department through the client web page, which is provided to the client terminal 24 of the major subsidiary by the technical support system 1.

In the engineering and service department, in step ST110, the technical support system 1 confirms and verifies the content of the claim report. In step ST111, it is checked whether there is a solution to the claim. If it has been determined in step ST112 that the solution is present in the database, an answer document based on this solution is sent to the major subsidiary in step ST113. On the other hand, if the solution is not present, the claim report is escalated to the product technology department at the upper service level in step ST114. In a case where the product technology department comprises, for example, a product planning section, a design and manufacturing section, and other sections, one of these sections is designated and a solution to the claim is requested therefrom. In FIG. 4, all the steps beginning with step ST110 are carried out within the technical support system 1.

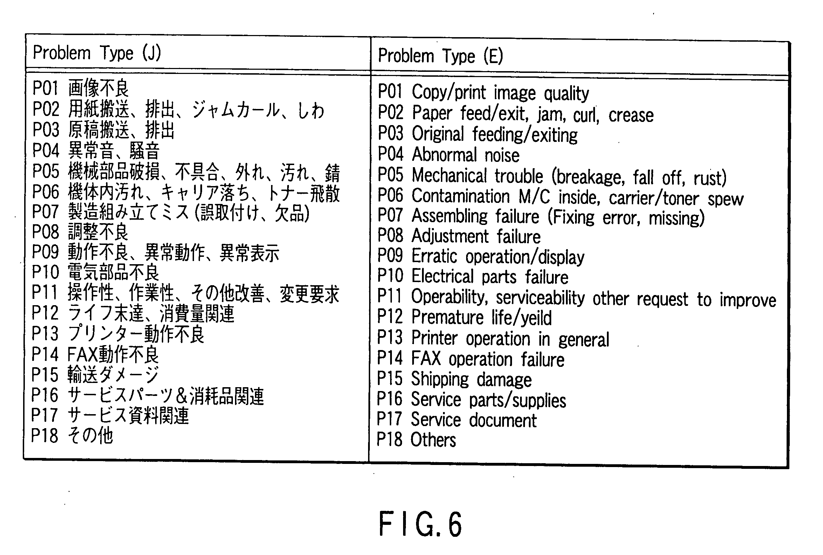

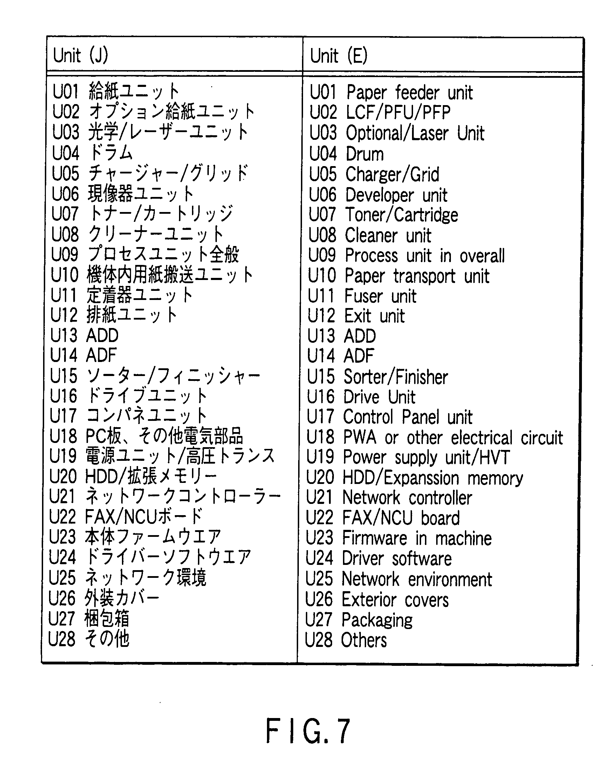

FIG. 5 illustrates a reporting process for an unformatted claim such as a claim report issued in the dealer. This reporting process is a process to be performed within the technical support system 1. If the reporting process is selected on the client web page, the CH section 14 performs, in step ST201, a knowledge search for confirming the presence of similar claims specified by information available from the claim content input to the client web page in a format close to a natural language, for example, information on product units or problems. In the knowledge search, product units and problems expressed in various local languages are converted to unit codes and problem codes using synonym tables, as shown in FIGS. 6 and 7. The KB section 16 is searched on the basis of these codes. If it is determined in step ST202 that a solution to the similar claims is present in the KB section 16, an answer document based on this solution is automatically produced in step ST203 using a response assistance module 14A. In step ST204, the answer document is issued to the major subsidiary. In this case, the response assistance module 14A produces the answer document so as to meet the technical support policy which differs from market to market. Aside from the above-mentioned synonym tables, it is possible to use tables applicable to cases where different model numbers are assigned to the same models in accordance with different countries. In the synonym tables shown in FIGS. 6 and 7, English and Japanese synonyms are associated. However, these tables may be provided as conversion tables for unifying languages within the system by converting languages such as Japanese or German to English, or a standard language. Thereby, it becomes possible to find a solution to similar claims from major subsidiaries managing other market regions.

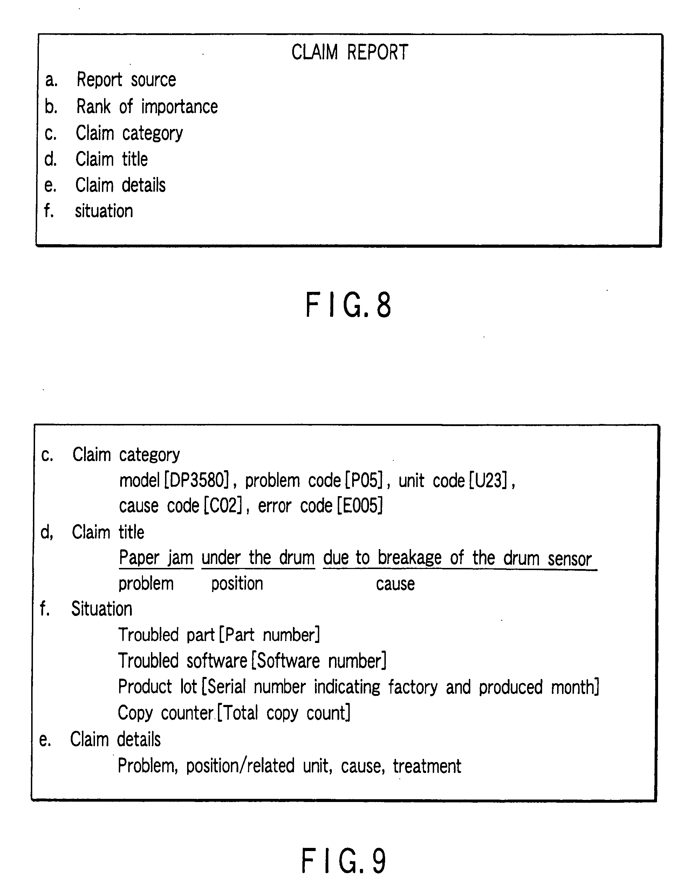

On the other hand, if a solution to the similar claims is not present in the KB section 16, a claim report is newly produced in step ST205 using a report assisting module 14B. The claim report is issued in step ST206. The report assisting module 14B automatically incorporates into the claim report the information available from the content of the claim input to the client web page, and requests input of information which is necessary for a study of a solution by the engineer but is lacking. Based on the information input in response to this request, the claim report is formatted. Specifically, as shown in FIG. 8, the production of the claim report requires information such as a) report source, b) rank of importance, c) claim category, d) claim title, e) claim details, and f) situation.

FIG. 9 shows details of items c, d, e and f incorporated in the claim report. Item c is prepared for searching for similar claims from a claim category on the basis of simple coincidence of keywords and codes, and item c includes a product model, a problem code, a unit code, a cause code and an error code. Item d is prepared for searching for similar claims on the basis of the claim title, and item d is produced as a phrase constructed by combining words indicative of definition information items such as a problem, a position and a cause. Examples of the claim title other than that shown in FIG. 9 are "Dark copy image due to poor adjustment in optical unit", "Abnormal noise from drive gear in fuser unit", and "Breakage of front cover due to poor package material." Item e is prepared for searching for similar claims based on claim details and is produced as a free description including items such as a problem, position/related unit, cause and treatment. Item f is prepared for searching for similar claims based on situations, and it is produced to include a part number, software version number, part number indicative of a problem part, and total copy counter value.

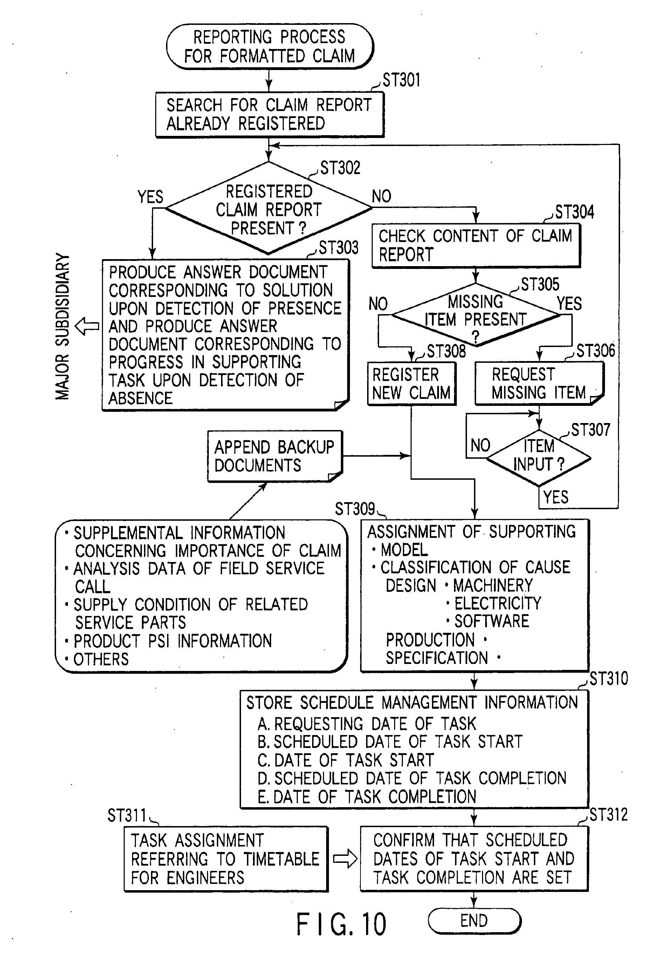

FIG. 10 illustrates a reporting process for a formatted claim such as the claim report shown in FIG. 8. This reporting process is a process to be performed within the technical support system 1. This process is performed when the claim report has been issued in the reporting process illustrated in FIG. 5 and when a formatted claim report has been input by choosing on the client web page. In this reporting process, the CH section 14 performs in step ST301 a search for the claim report on the basis of the claim category, claim title, claim details and situation. If it is determined in step ST302 that the claim report has already been registered in the KB section 16, an answering document is automatically produced in step ST303 using the answer assisting module 14A and it is issued to the major subsidiary. In this case, where there is a solution to the claim report, the answer assisting module 14A produces an answering document based the solution. Where there is no solution, the answer assisting module 14A produces an answering document based on the state of progress in the supporting task.

On the other hand, if the claim report is not registered in the KB section 16, the content of the claim report is checked in step ST304 as to whether there is an item missing. If there is a missing item in step ST305, the input of this item is requested on the client web page in step ST306. After the input of information of this item is detected in step ST307, the KB section 16 is searched once again. If it is determined that the claim report is not registered in this case, too, it is confirmed in step ST304 that there is no missing item. Then, in step ST308, the claim report is newly registered in the KB section 16.

Subsequently, in step ST309, the CH section 14 performs a division designation process for assigning a supporting task to a division-in-charge in the product technology department, which is responsible for the registered claim report. Specifically, the product technology department is divided in advance into divisions for design relating to machinery, electricity and software, production, and specification. Thus, it is found from the content of the claim report which division is associated with the product model and the cause.

Then, in step ST310, the CH section 14 adds schedule management information to the claim report registered in the KB section 16, and appends thereto support backup documents obtained from the MIS section 12, and requests a support task for the claim report to the division-in-charge. This request is effected on an engineer web page provided by the SIP section 10 on the Internet 26 or intra-company LAN. The support backup documents comprise, for example, supplemental information concerning the importance or seriousness of the claim, the analysis data of a field service call, the supply condition of related service parts, the product PSI information, and others. The schedule management information includes data representative of a requesting date of a supporting task, a scheduled date of supporting task start, a date of supporting task start, a scheduled date of supporting task completion, a date of supporting task completion, and a supervisory engineer and a staff engineer in the division-in-charge. The data on the requesting date of the supporting task and the division-in-charge is automatically recorded by the CH section 14. The data on the scheduled date of supporting task start, the date of supporting task start, the scheduled date of supporting task completion, the date of supporting task completion, the supervisory engineer and the staff engineer are input and recorded on the engineer web page. On the engineer web page, the work schedule table stored in the MDB section 18 can be referred to so that the schedule of each engineer in the division-in-charge may be checked. Furthermore, in step ST311, the most suitable engineer for solving the claim is decided in consideration of the field-in-charge, experience and technical level. Besides, a message to the effect that a solution to the claim report is now being studied and a supporting task schedule are sent to the subsidiary.

The above-described claim reporting process is finished in step ST312 in which the data on the scheduled date of supporting task start, the scheduled date of supporting task completion, the supervisory engineer and the staff engineer is input and recorded on the engineer web page.

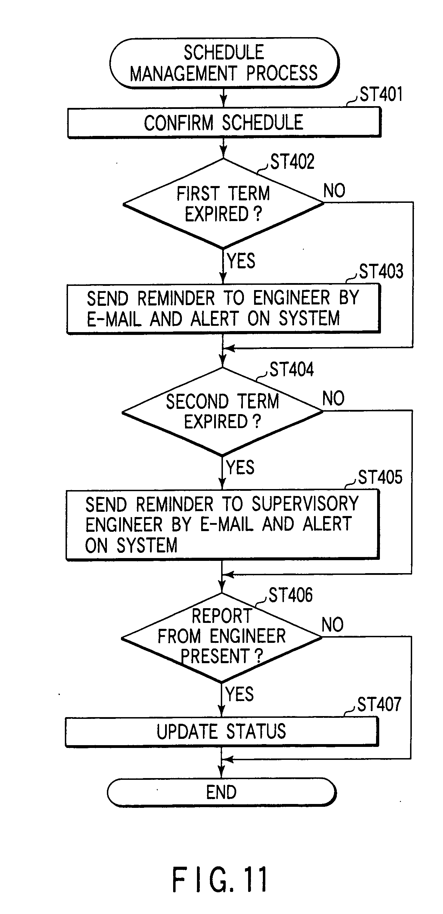

FIG. 11 illustrates a schedule management process for an unsolved claim report. The schedule management process is a process to be carried out within the technical support system 1. The schedule management process is executed when the date of supporting task completion is not recorded in the schedule management information. In this management process, the scheduled date of supporting task start and the scheduled date of supporting task completion in the schedule management information are confirmed in step ST401. Then, it is checked in step ST402 whether a first term has passed the scheduled date of task start and approached the scheduled date of task completion. If the first term has expired, a reminder is sent in step ST403 to the staff engineer by e-mail and an alert is issued to the system. It is then checked in step ST404 whether a second term, which is closer to the scheduled date of supporting task completion than the first term, has expired. If the second term has expired, a reminder is sent in step ST405 to the supervisory engineer by e-mail and an alert is issued to the system. Subsequently, it is checked in step ST406 whether there is a report on the supporting task from the engineer. If the report is present, the state of progress of the supporting task is updated based on the report in step ST407. The schedule management process is periodically performed on a daily basis. If claim reports newly registered after the request for a supporting task include a claim report similar to the claim report relating to the supporting task, this claim report is also appended as a backup document at the time of sending the reminder.

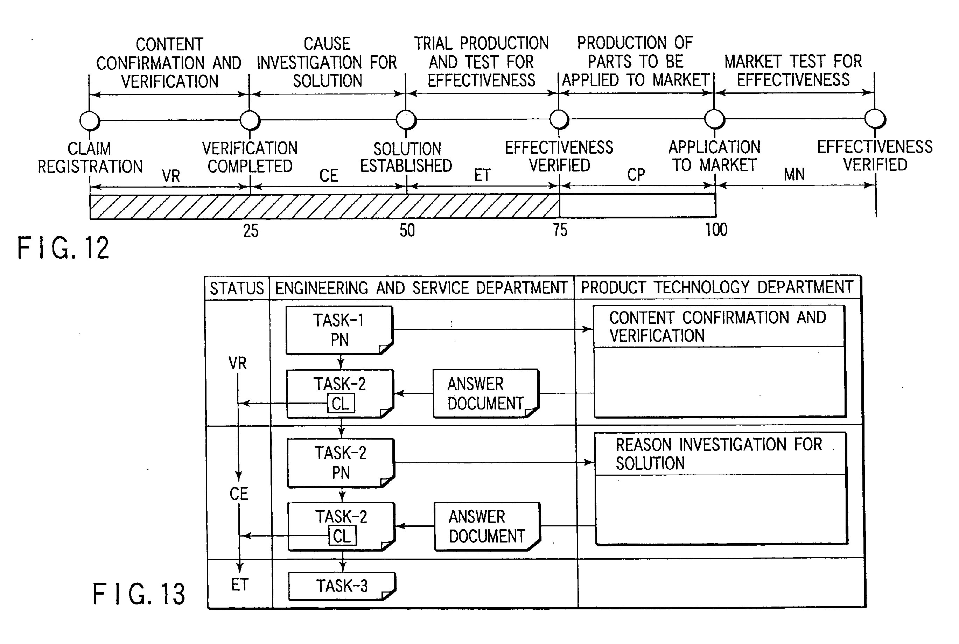

FIG. 12 shows a stepwise transition in the supporting task managed by the schedule management process. If the claim report is accepted in the product technology department, the content of the claim report is confirmed and verified in a first stage. An investigation of the cause and a study for a solution are carried out in a second stage. Trial production and a test for effectiveness are performed in a third stage. If the content of the claim requires alteration of parts in the future, production of parts to be applied to markets is carried out in a fourth stage, and a market test for effectiveness in markets is conducted in a fifth stage.

The CH section 14 has a function of presenting the state of progress in the supporting task in a visible format as shown in FIG. 12. The results of the first, second, third, fourth and fifth stages are reported as answer documents to the technical support system 1. In the technical support system 1, the state of progress in the supporting task is displayed by statuses or percentages, which are successively updated according to the task reports, like VR, CE, ET, CP and MN. In addition, the state of progress in the supporting task may be managed by a sub-task sheet on which the status is automatically updated within the technical support system 1, as shown in FIG. 13.

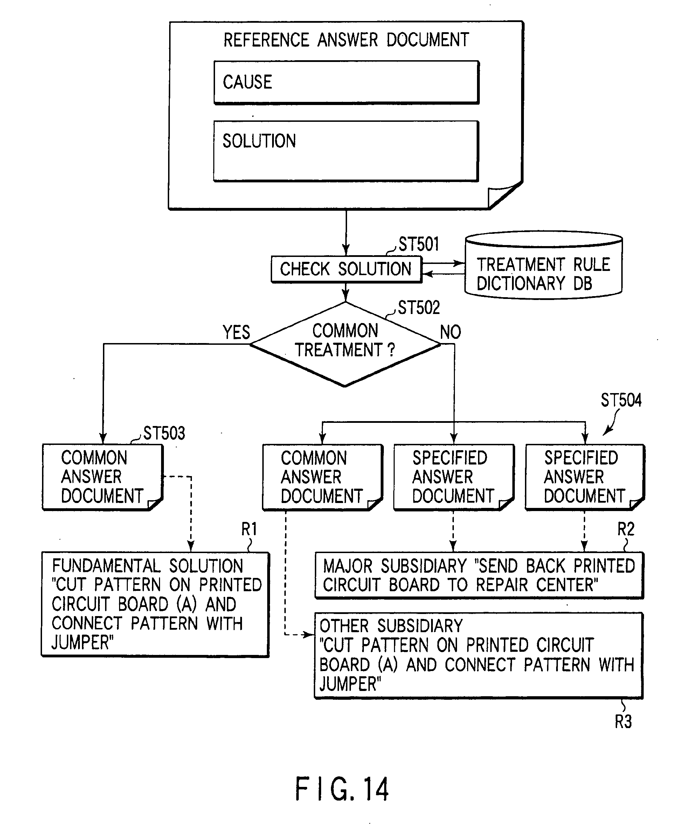

FIG. 14 illustrates an answering process for preparing an answer document on the basis of a solution acquired in the supporting task. A reference answer document from the engineer comprises a cause and a solution. The CH section 14 receives the reference answer document from the engineer web page. In step ST501, a solution to the answer document is checked by referring to a support treatment rule dictionary DB storing technical support policies prepared for the subsidiaries in the market regions. If it is detected in step ST502 that a common treatment is possible for all market regions, a common answer document R1 is sent to all subsidiaries in step ST503. If a common treatment is not possible, a specified answer document R2 is sent to a specified subsidiary in step ST504 and a common answer document R3 is sent to other subsidiaries. The common answer documents R1 and R3 show a fundamental solution such as "CUT PATTERN ON PRINTED CIRCUIT BOARD (A) AND CONNECT PATTERN WITH JUMPER." The specified answer document R2 shows a drastic solution such as "SEND BACK PRINTED CIRCUIT BOARD TO REPAIR CENTER."

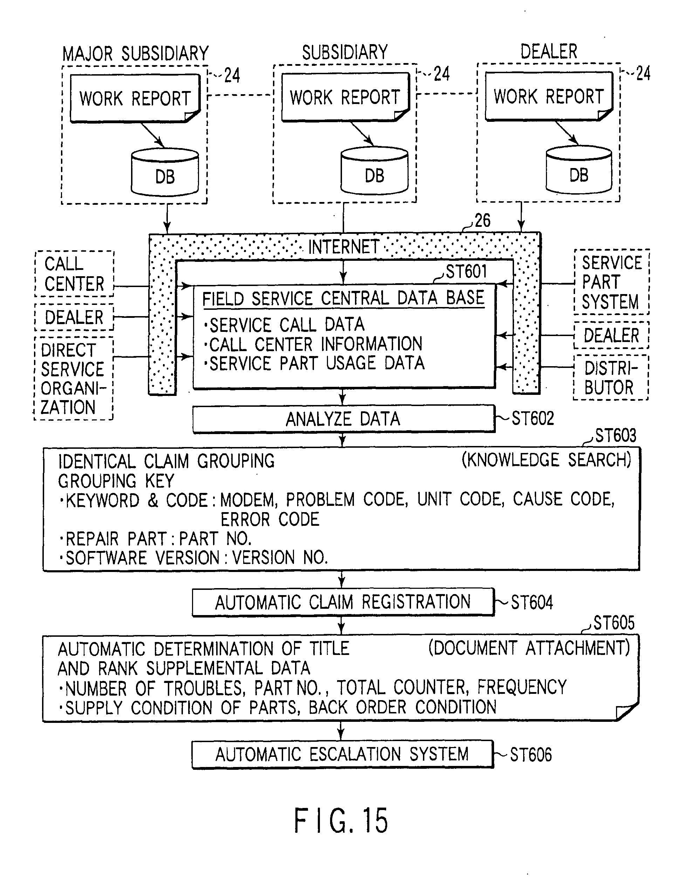

FIG. 15 shows an example in which the technical support system 1 is applied to a novel technical service structure. In this example, like the major subsidiaries, the client terminals 24 of the dealers, direct service organization, distributors and ordinary subsidiaries can access the technical support system 1 over the Internet 26. For example, in the dealer, the operator of the client terminal 24 analyzes task reports filed in the database as results of field services such as product maintenance and repair by field servicemen. If an emergency situation where a number of identical claims exist is detected, the operator of the client terminal 24 accesses over the Internet 26 the technical support system 1 disposed in the engineering and service department in Tokyo and reports the claim through the client web page provided by the technical support system 1 to the client terminal 24 of the dealer. In the technical support system 1, the claim report is processed as in the case of the major subsidiary. As a result, the intermediate service layer between the dealer and the engineering and service department can be omitted.

In addition, in this technical support system 1, the MIS section 12 accesses not only the major subsidiary but also the client terminals 24 of the dealer, direct service organization, distributor and ordinary subsidiary, and collects claim reports stored in the databases DB in the client terminals 24. Furthermore, the MIS section 12 can directly access the call center and service parts system without intervention of the major subsidiaries. The MIS section 12 can collect service call data and call center information from the call center, as well as service parts usage data from the service part system. The collected information is accumulated in the field service central database in the MDB section 18 in step ST601. In step ST602, the MIS section 12 analyzes the collected information. In step ST603, the CH section 14 cooperates with the MIS section 12 and searches the KB section 16 with respect to claims acquired from the analysis results of the collection information. If there are no similar claims in the KB section 16, a claim report is produced in step ST604. In addition, in step ST605, support backup documents on the supply condition of parts, back order condition, etc. are attached. In step ST606, a supporting task for this claim report is requested from the division-in-charge. In short, the escalation of the claim report is automatically effected by the above process, and the claim report is processed similarly with that from the subsidiary.

It is thus possible to acquire claim reports that directly reflect claims of end-users but are hidden in the major subsidiaries or lower-level service layers.

In the technical support system 1 according to the present embodiment, the CH section 14 registers in the knowledge base section a new claim report in which at least a claim title is structured as a combination of predetermined items of definition information on the basis of a claim content input to the client web page. The CH section 14 manages the registered new claim report as an unsolved claim that requires an answer from the engineer. Thus, whether a solution to a claim report has already been obtained can be found by a high-precision search. If the solution is found by the search, an answer from the engineer is not needed and the claim can be quickly solved.

The CH section 14 performs a knowledge search for confirming the presence of similar claims specified by information available from the claim content input to the client web page in a format close to a natural language, for example, information on product units or problems. Thus, unformatted claims such as claim reports from dealers can be utilized for the knowledge search. Moreover, since the product units and problems expressed in various local languages are converted to unit codes and problem codes, for example, using synonym tables, the precision in the search does not depend on the languages in the market regions.

When a solution is obtained by the knowledge search with respect to an unformatted claim, an answer document based on the solution is automatically produced using the answer assisting module 14A and the answer document is issued to the major subsidiary. The response assistance module 14A produces the answer document so as to meet the technical support policy which differs from market region to market region. Therefore, suitable answers can be produced for subsidiaries in various market regions.

On the other hand, even if a solution to similar claims is not obtained, a claim report is newly produced using the report assistance module 14B. The report assisting module 14B automatically incorporates into the claim report the information available from the content of the claim input to the client web page, and requests input of information which is necessary for a study of a solution by the engineer but is lacking. Based on the information input in response to this request, the claim report is formatted. Therefore, defects in the claim report can be effectively improved.

The state of progress in the supporting task is visualized on a display as statuses or percentages, which are successively updated according to the task reports, like VR, CE, ET, CP and MN shown in FIG. 12. Therefore, the state of progress can be easily understood.

In a case where a solution to a claim report, although being present in the KB section 16, has not been acquired, a response indicating the state of progress in the supporting task is produced. Thus, the client of the subsidiary can easily know when the solution is to be obtained.

In the above-described embodiment, the technical support system 1 has been described as processing claims relating to products such as copiers and facsimile machines. However, the present invention is not limited to this embodiment. The present invention is applicable not only to the worldwide technical service network, but also to a case where plural market regions are present in a single country. Moreover, at least one of the SIP section 10, MIS section 12, CH section 14, KB section 16, MDB section 18, and DWH section 20 of the technical support system 1 may be composed of a server computer, in which application software of the functions described in connection with the above embodiment is installed from a recording medium or downloaded via the interface 22.

## Claims

1. A technical support system comprising:
a service information portal section (10) for providing web pages as an information input and output interface; and
a knowledge base section (16) for storing various claim reports and solutions answered by an engineer with respect to the claim reports;
**characterized by** further comprising a claim handling section (14) for registering in the knowledge base section (16) a new claim report in which at least a claim title is structured as a combination of predetermined items of definition information on the basis of a claim content input to a client web page, and managing the registered new claim report as an unsolved claim requiring an answer from the engineer.

2. A technical support system according to claim 1, **characterized in that** the claim handling section (14) is constructed to search the knowledge base section (16) for similar claims specified by information available from the claim content input to the client web page in a format close to a natural language.

3. A technical support system according to claim 2, **characterized in that** the claim handling section (14) has a synonym table (FIG. 6, FIG. 7) for converting information of different languages available from the claim content input to the client web page to common codes.

4. A technical support system according to claim 2, **characterized in that** the claim handling section (14) has a answer assisting module (14A) for producing, where a solution has been obtained as a search result of the knowledge base section (16), an answer based on the solution so as to meet a technical support policy varying from market region to market region.

5. A technical support system according to claim 2, **characterized in that** the claim handling section (14) has a report assisting module (14B) for automatically incorporating, where a solution has not been obtained as a search result of the knowledge base section (16), information available from the claim content input to the client web page into the claim report, and requesting additional input of information which is necessary for a study of a solution by the engineer but is lacking.

6. A technical support system according to claim 1, **characterized in that** the claim handling section (14) is constructed to assign a supporting task for acquiring a solution to a claim of the claim report to a technical division responsible for the claim, and to request the solution from the technical division.

7. A technical support system according to claim 6, **characterized in that** the claim handling section (14) is constructed to attach to the claim report a backup document for backing up the supporting task.

8. A technical support system according to claim 6, **characterized in that** the claim handling section (14) is constructed to set a schedule of the supporting task, and to send a reminder when a scheduled date of supporting task completion is drawing near.

9. A technical support system according to claim 8, **characterized in that** the claim handling section (14) is constructed to attach to the reminder, where there is a new claim report similar to the claim of the supporting task, the new claim report as a backup document.

10. A technical support system according to claim 6, **characterized in that** the claim handling section (14) is constructed to visualize the state of progress of the supporting task.

11. A technical support system according to claim 1, **characterized in that** the claim handling section (14) has a table for converting the claim content to a specific language.

12. A technical support system according to claim 1, **characterized in that** the claim handling section (14) has a table applicable to a case where different model numbers are assigned to a model of the claim content in accordance with different market regions.

13. A technical support system according to claim 6, **characterized in that** the claim handling section (14) is constructed to decide on an engineer in charge on the basis of at least one of a schedule, a field in charge, experience, and a technical level of each engineer in a technical division to which the supporting task has been assigned.

14. A technical support system according to claim 6, **characterized in that** the claim handling section (14) is constructed to issue, where a solution has not been obtained as a search result of the knowledge base section (16), a notice to the effect that the solution is now being studied.

15. A technical support system according to claim 6, **characterized in that** the claim handling section (14) is constructed to issue, where a solution has not been obtained as a search result of the knowledge base section (16), a notice of a schedule of the supporting task.

16. A technical support system according to claim 6, **characterized in that** the claim handling section (14) is constructed to produce an answer document in which a solution answered on an engineer web page is modified so as to meet a technical support policy which varies from market region to market region.

17. A technical support method using a knowledge base section (16) for storing in various claim reports and solutions answered by an engineer with respect to the claim reports, the method comprising:
a step of providing web pages as an information input and output interface; and
a step of registering in the knowledge base section (16) a new claim report in which at least a claim is structured as a combination of predetermined items of definition information on the basis of a claim content input to a client web page, and managing the registered new claim report as an unsolved claim requiring an answer from the engineer.

18. A technical support method according to claim 17, **characterized by** further comprising a step of searching the knowledge base section (16) for similar claims specified by information available from the claim content input to the client web page in a format close to a natural language.

19. A technical support method according to claim 18, **characterized by** further comprising a step of converting information of different languages available from the claim content input to the client web page to common codes.

20. A technical support method according to claim 18, **characterized by** further comprising a step of producing, where a solution has been obtained as a search result of the knowledge base section (16), an answer based on the solution so as to meet a technical support policy varying from market region to market region.

21. A technical support method according to claim 18, **characterized by** further comprising a step of automatically incorporating, where a solution has not been obtained as a search result of the knowledge base section (16), information available from the claim content input to the client web page into the claim report, and requesting additional input of information which is necessary for a study of a solution by the engineer but is lacking.

22. A technical support method according to claim 17, **characterized by** further comprising a step of assigning a supporting task for acquiring a solution to a claim of the claim report to a technical division responsible for the claim, and requesting the solution from the technical division.

23. A technical support method according to claim 22, **characterized by** further comprising a step of attaching to the claim report a backup document for backing up the supporting task.

24. A technical support method according to claim 22, **characterized by** further comprising a step of setting a schedule of the supporting task, and sending a reminder when a scheduled date of supporting task completion is drawing near.

25. A technical support method according to claim 24, **characterized by** further comprising a step of attaching to the reminder, where there is a new claim report similar to the claim of the supporting task, the new claim report as a backup document.

26. A technical support method according to claim 22, **characterized by** further comprising a step of visualizing the state of progress of the supporting task.

27. A technical support method according to claim 17, **characterized by** further comprising a step of converting the claim content to a specific language.

28. A technical support method according to claim 17, **characterized by** further comprising a step applicable to a case where different model numbers are assigned to a model of the claim content in accordance with different market regions.

29. A technical support method according to claim 22, **characterized by** further comprising a step of deciding on an engineer in charge on the basis of at least one of a schedule, a field in charge, experience, and a technical level of each engineer in a technical division to which the supporting task has been assigned.

30. A technical support method according to claim 22, **characterized by** further comprising a step of issuing, where a solution has not been obtained as a search result of the knowledge base section (16), a notice to the effect that the solution is now being studied.

31. A technical support method according to claim 22, **characterized by** further comprising a step of issuing, where a solution has not been obtained as a search result of the knowledge base section (16), a notice of a schedule of the supporting task.

32. A technical support method according to claim 22, **characterized by** further comprising a step of producing an answer document in which a solution answered on an engineer web page is modified so as to meet a technical support policy which varies from market region to market region.
